(19) Europäisches Patentamt
European Patent Office
Office européen des brevets

(11) EP 4 760 472 A1

(12) EUROPEAN PATENT APPLICATION
published in accordance with Art. 153(4) EPC

(43) Date of publication:
17.06.2026 Bulletin 2026/25

(51) International Patent Classification (IPC):
G06F 3/04845 (2022.01)

(21) Application number: 24909706.4

(52) Cooperative Patent Classification (CPC):
G06F 3/04845; G06F 3/04883; G06F 9/451

(22) Date of filing: 24.07.2024

(86) International application number:
PCT/CN2024/107252

(87) International publication number:
WO 2025/138752 (03.07.2025 Gazette 2025/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.12.2023 CN 202311833651

(71) Applicant: Honor Device Co., Ltd.
Shenzhen, Guangdong 518040 (CN)

(72) Inventor: MU, Weihu
Shenzhen, Guangdong 518040 (CN)

(74) Representative: MERH-IP Matias Erny Reichl
Hoffmann
Patentanwälte PartG mbB
Paul-Heyse-Straße 29
80336 München (DE)

(54) SCREEN DISPLAY METHOD, ELECTRONIC DEVICE, AND RELATED APPARATUS

(57) This application provides a screen display method, an electronic device, and a corresponding apparatus. In the method, a touch operation for an electronic device is first received when a target scenario is displayed by the electronic device; then based on a frame rate at which the electronic device displays the target scenario, a first touch event, and a reporting rate of the electronic device, a second touch event adapted to the frame rate is determined, where the first touch event is a touch event generated based on the touch operation, and the second touch event includes a second moment corresponding to the second touch event and second touch coordinates corresponding to the second touch event; and an interface corresponding to the target scenario is displayed based on the second touch event.

FIG. 4

## Description

This application claims priority to Chinese Patent Application No. 202311833651.4, filed with the China National Intellectual Property Administration on December 27, 2023 and entitled "SCREEN DISPLAY METHOD, ELECTRONIC DEVICE, AND CORRESPONDING APPARATUS", which is incorporated herein by reference in its entirety.

## TECHNICAL FIELD

This application relates to the field of terminal technologies, and in particular, to a screen display method, an electronic device, and a corresponding apparatus.

## BACKGROUND

With popularization of touchscreen devices, a touch operation (for example, a slide operation and a long press operation) on a screen of a touchscreen device becomes an important manner of human-computer interaction, and touch responsiveness of the device becomes an important indicator that affects user experience.

Touch responsiveness is a parameter that characterizes a speed at which a touchscreen device responds to a touch operation of a user, and may be set as duration from a moment when the user's finger touches a screen to a moment when a corresponding picture is displayed on the screen. A faster response speed indicates higher touch responsiveness. Correspondingly, user experience is better.

With development of scientific and technological levels, hardware configuration applied to touchscreen devices is increasingly high, while touch responsiveness is often low, and cannot meet user requirements. To improve user experience, there is an urgent need for a solution that can improve touch responsiveness of a touchscreen device.

## SUMMARY

To improve touch responsiveness of an electronic device, embodiments of this application provide a screen display method, an electronic device, and a corresponding apparatus.

According to a first aspect, this application provides a screen display method, including:

receiving a touch operation for an electronic device when a target scenario is displayed by the electronic device; determining, based on a frame rate at which the electronic device displays the target scenario, a first touch event, and a reporting rate of the electronic device, a second touch event adapted to the frame rate, where the first touch event is a touch event generated based on the touch operation, and the second touch event includes a second moment corresponding to the second touch event and second touch coordinates corresponding to the second touch event; and displaying, based on the second touch event, an interface corresponding to the target scenario.

According to the solutions provided in the embodiments of this application, the second touch event is redetermined on the basis of the first touch event instead of directly displaying the interface based on the first touch event, and the second touch event is adapted to the frame rate at which the electronic device displays the target scenario, that is, the frame rate for the target scenario is considered when the electronic device displays the interface, so that the second touch event for interface display can be determined based on the frame rate for the target scenario. Therefore, touch responsiveness can be improved even if a sampling rate and a reporting rate of the electronic device are low.

In an optional design, the determining, based on a frame rate at which the electronic device displays the target scenario, a first touch event, and a reporting rate of the electronic device, a second touch event adapted to the frame rate includes:

determining a duration threshold corresponding to the target scenario; and determining, based on the duration threshold and each display moment corresponding to the frame rate, a second moment corresponding to each second touch event, where duration between the display moment and the second moment is not less than the duration threshold.

With this design, the duration threshold can be determined based on the target scenario, and then the second moment can be determined based on the duration threshold and each display moment corresponding to the frame rate, that is, the target scenario and the frame rate are considered when the second moment is determined, so that adaptability of the second touch event to the target scenario can be further improved.

In an optional design, the determining, based on a frame rate at which the electronic device displays the target scenario, a first touch event, and a reporting rate of the electronic device, a second touch event adapted to the frame rate includes:

determining a first coefficient based on the second moment and each reporting moment corresponding to the reporting rate; and
determining the second touch coordinates based on the first coefficient and first touch coordinates of the first touch operation corresponding to each reporting moment.

In an optional design, the determining a first coefficient based on the second moment and each reporting moment corresponding to the reporting rate includes:

determining a first difference and a second difference separately, where the first difference is a difference between a second reporting moment and a first reporting moment, the second reporting moment and the first reporting moment are adjacent reporting moments, the second reporting moment is later than the first reporting moment, and the second difference is a difference between the second reporting moment and the second moment corresponding to the second reporting moment; and
determining a ratio of the second difference to the first difference, where the ratio is the first coefficient.

In an optional design, if the first coefficient is greater than 0, the determining the second touch coordinates based on the first coefficient and first touch coordinates of the first touch operation corresponding to each reporting moment includes:

determining first products of second coordinates and the first coefficient, and determining second products of first coordinates and a second coefficient, where the first coordinates are first touch coordinates of the first touch operation corresponding to the first reporting moment, the second coordinates are first touch coordinates of the first touch operation corresponding to the second reporting moment, and the second coefficient is a difference between 1 and the first coefficient; and
determining sums of the first products and the second products, where the second touch coordinates are the sums of the first products and the second products; or
if the first coefficient is less than 0, the determining the second touch coordinates based on the first coefficient and first touch coordinates of the first touch operation corresponding to each reporting moment includes:

determining third products of the first coordinates and the first coefficient, and determining fourth products of the second coordinates and the second coefficient; and
determining sums of the third products and the fourth products, where the second touch coordinates are the sums of the third products and the fourth products.

In an optional design, the determining a duration threshold corresponding to the target scenario includes:

determining, based on a correspondence between different frame rate ranges and different duration thresholds, and the frame rate at which the electronic device displays the target scenario, a duration threshold corresponding to the target scenario;
or
determining, based on a correspondence between different application types and different duration thresholds, and an application type corresponding to the target scenario, a duration threshold corresponding to the target scenario.

In an optional design, the displaying, based on the second touch event, an interface corresponding to the target scenario includes:

generating a corresponding image frame based on the second touch coordinates corresponding to the second touch event;
determining, when the electronic device refreshes at a refresh rate, the image frame refreshed in a same refresh period; and
generating a corresponding interface based on a target image frame refreshed in the same refresh period, and displaying the interface, where the target image frame is generated based on a target touch event, and in the second touch event corresponding to the image frame refreshed in the refresh period, the second moment corresponding to the target touch event is the latest.

In this design, because the target image frame is generated based on the target touch event, the interface of the electronic device is displayed correspondingly based on the latest determined second touch event, so that duration from a moment when the electronic device receives a touch operation to a moment when a corresponding picture is displayed on the screen can be reduced, thereby correspondingly improving touch responsiveness of the electronic device.

In an optional design, first duration is twice second duration, where the first duration is duration of a reporting period corresponding to a reporting rate of the electronic device, and the second duration is duration between the second moments respectively corresponding to two adjacent second touch events.

In an optional design, the determining, based on a frame rate at which the electronic device displays the target scenario, a first touch event, and a reporting rate of the electronic device, a second touch event adapted to the frame rate includes:

determining a third touch event in the first touch event, where the first touch event includes the third touch event and a fourth touch event, the fourth touch event is a touch event generated based on first n touchscreen signals, and n is a positive integer; and

determining, based on a frame rate at which the electronic device displays the target scenario, the third touch event, and a reporting rate of the electronic device, a second touch event adapted to the frame rate.

Because the fourth touch event is a touch event generated based on the first n touchscreen signals, that is, the fourth touch event is a touch event generated based on earlier touchscreen signals, after the fourth touch event is generated, the user's finger often moves to another position, and thus there is no need to determine the second touch event through the fourth touch event. With this design, lag in display of an interface on the screen can be reduced, thereby further improving touch responsiveness of the electronic device.

According to a second aspect, this application provides an electronic device, including a processor and a memory, where the memory stores program instructions, and when the program instructions are executed by the processor, the electronic device is enabled to perform the method according to the first aspect.

According to a third aspect, this application provides a computer storage medium, where the computer storage medium stores a computer program or instructions, and when the computer program or the instructions are executed, the method according to the first aspect is performed.

According to a fourth aspect, this application provides a chip system, including a processor, where the processor is coupled to a memory and configured to execute a computer program or instructions stored in the memory, and when the computer program or the instructions are executed, the method according to the first aspect is performed.

According to the solutions provided in the embodiments of this application, the second touch event is redetermined on the basis of the first touch event instead of directly displaying the interface based on the first touch event, and the second touch event is adapted to the frame rate at which the electronic device displays the target scenario, that is, the frame rate for the target scenario is considered when the electronic device displays the interface, so that the second touch event for interface display can be determined based on the frame rate for the target scenario. Therefore, touch responsiveness can be improved even if a sampling rate and a reporting rate of the electronic device are low.

For example, if the frame rate at which the electronic device displays the target scenario is high, adjacent second touch events are close to each other, a time interval between adjacent second touch events is shorter than a time interval between adjacent first touch events, and a frequency of generating an image frame by using the second touch event is higher than that by using the first touch event. Therefore, when an interface is displayed based on the second touch event, the interface displayed by the electronic device is smoother, and corresponding touch responsiveness is higher, thereby improving touch responsiveness of the electronic device.

**BRIEF DESCRIPTION OF DRAWINGS**

To describe the technical solutions in embodiments of the present invention or the conventional technology more clearly, the following briefly describes the accompanying drawings required for describing the embodiments or the conventional technology. Clearly, the accompanying drawings in the following description show some embodiments of the present invention, and persons of ordinary skill in the art may still derive other drawings from these accompanying drawings without creative efforts.

FIG. 1 is an example diagram of a software architecture of an electronic device;
FIG. 2 is a schematic diagram of a structure of an electronic device according to an embodiment of this application;
FIG. 3 is an example diagram of a software architecture of an electronic device according to an embodiment of this application;
FIG. 4 is a schematic flowchart of a screen display method according to an embodiment of this application;
FIG. 5 is a schematic flowchart of another screen display method according to an embodiment of this application;
FIG. 6A is an example diagram of a time axis for a screen display method according to an embodiment of this application;

FIG. 6B is an example diagram of another time axis for a screen display method according to an embodiment of this application;

FIG. 7 is a schematic flowchart of another screen display method according to an embodiment of this application;

FIG. 8A is an example diagram of another time axis for a screen display method according to an embodiment of this application;

FIG. 8B is an example diagram of another time axis for a screen display method according to an embodiment of this application;

FIG. 9 is a schematic diagram of signals in a screen display method according to an embodiment of this application; and

FIG. 10 is a schematic diagram of a structure of an electronic device according to an embodiment of this application.

## DESCRIPTION OF EMBODIMENTS

Technical solutions in the embodiments of this application are described below with reference to the accompanying drawings in the embodiments of this application.

The terms used in the following embodiments are merely used for describing specific embodiments, and are not intended to limit this application. As used in the specification and the appended claims of this application, singular expressions "one", "a", "the", "the foregoing", and "this" are also intended to include an expression such as "one or more", unless contrary indication is clearly specified in the context. It should be further understood that in the following embodiments of this application, "at least one" and "one or more" mean one, two, or more than two. The term "and/or" is used to describe an association relationship between associated objects, and indicates that three relationships may exist. For example, "A and/or B" may represent the following cases: Only A exists, both A and B exist, and only B exists, where A and B may be singular or plural. The character "/" usually indicates an "or" relationship between associated objects.

As described in this specification, referring to "one embodiment" or "some embodiments" or the like means that one or more embodiments of this application include particular features, structures, or characteristics described with reference to the embodiments. Therefore, statements such as "in one embodiment", "in some embodiments", or "in some other embodiments" that appear in different parts of this specification do not necessarily refer to same embodiments, but mean "one or more but not all embodiments", unless otherwise specifically emphasized in other manners. The terms "include", "comprise", "have", and variants thereof all mean "include but are not limited to", unless otherwise specially emphasized in other manners.

For clarity and brevity of the following embodiments, a brief description of a related technology is first provided.

Screens of some electronic devices include a display (for example, a liquid crystal display) and a touch panel (touch panel, TP) with a built-in touch sensor. Such an electronic device may be referred to as a touchscreen device. A user may implement human-computer interaction with the electronic device through a touch operation on the electronic device, so that the electronic device performs a function corresponding to the touch operation, and the display displays a corresponding interface to meet a requirement of the user for operating the electronic device.

In the current technical solution, when the user performs a touch operation on the electronic device, a corresponding touchscreen signal may be generated when the user's finger touches the screen. The touch sensor in the TP may sample the touchscreen signal at a sampling rate, and generate a corresponding touch event based on the sampled touchscreen signal. The touch event may include coordinates at which the user's finger touches the screen when the touchscreen signal is generated.

Then, a module inside the electronic device may report the touch event based on a corresponding reporting rate. After receiving the touch event, a module configured to draw image frames performs, based on the touch event, corresponding operations of drawing, rendering, and compositing layers to obtain image frames. The reporting rate is a frequency of reporting the touch event after the TP receives the touch operation.

A driver of the display refreshes at a corresponding refresh rate, so that the display displays corresponding image frames, and thus pictures displayed by the display change.

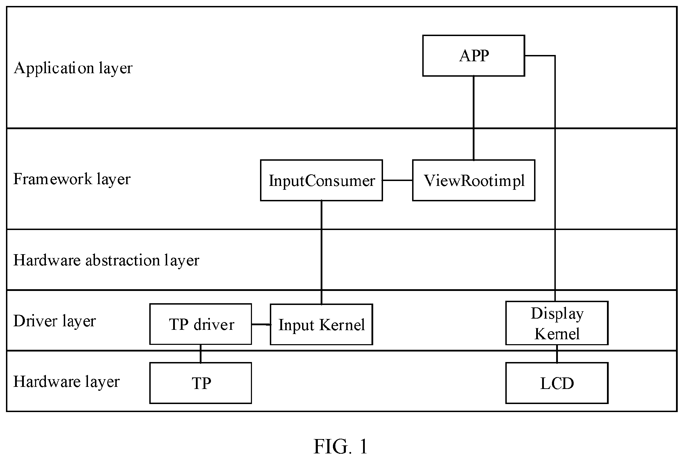

For example, referring to an example diagram of a current software architecture shown in FIG. 1, a software architecture of an electronic device includes a driver layer (Driver layer), a hardware abstraction layer (hardware abstraction layer, HAL), a framework (framework, FWK) layer, and an application (application, APP) layer. The driver layer is connected to a hardware layer (Hardware layer).

The hardware layer includes a TP and a liquid crystal display (liquid crystal display, LCD). After the TP generates a touch event, the touch event may be transmitted to a TP driver (TP driver) at the driver layer, then transmitted by the TP driver to an input kernel (Input Kernel) module at the driver layer, and transmitted by the input kernel through the HAL layer to an input consumer (InputConsumer) module at the FWK layer. A view root implementation (ViewRootimpl) module at the FWK layer obtains the touch event from the InputConsumer, and reports the touch event to an application module (APP module) at the APP layer at a preset reporting rate. After receiving the touch event, the application module generates a corresponding vertical synchronization signal (vsync signal) based on the touch event. Then, a corresponding module at each layer may draw, render, and composite layers based on the vsync signal to obtain an image frame.

After the image frame is obtained, a display kernel module (Display Kernel module) at the driver layer refreshes the image frame at a corresponding refresh rate, and then image frames refreshed in each refresh period are displayed by the LCD, so that pictures displayed by the LCD change.

It may be learned from the foregoing description that, after the user touches the TP, the display of the electronic device displays a corresponding picture.

In actual use, the user sometimes pays attention to a speed at which the electronic device responds to a touch operation performed by the user, and touch responsiveness may be used to characterize the speed. Touch responsiveness may be set as duration from a moment when the user's finger touches a screen to a moment when a corresponding picture is displayed on the screen. A faster response speed indicates higher touch responsiveness and smoother pictures displayed on the screen. Correspondingly, user experience is better.

As performance of hardware configuration of electronic devices is increasingly improved, users also expect that the electronic devices have higher touch responsiveness in some scenarios (for example, a scenario in which an electronic device is used to play a game).

It may be learned from the foregoing description that touch responsiveness of an electronic device is usually related to a sampling rate and a reporting rate of the electronic device. Currently, when an electronic device is delivered from a factory, a sampling rate and a reporting rate are usually set to fixed values.

However, with development of scientific and technological levels, hardware configuration of an electronic device has been greatly improved, and a sampling rate and a reporting rate are usually set when hardware configuration is low. That is, currently, a sampling rate and a reporting rate of an electronic device are often low. As a result, currently, touch responsiveness of the electronic device is relatively low compared with touch responsiveness that can be supported by the hardware configuration of the electronic device. Therefore, there is an urgent need for a solution that can improve touch responsiveness of an electronic device.

To resolve the foregoing problem, embodiments of this application provide a screen display method, an electronic device, and an apparatus, to improve touch responsiveness of the electronic device. The method provided in the embodiments of this application may be performed by an electronic device. The electronic device may receive a touch operation, and can display a corresponding interface.

The electronic device may be a wireless terminal, a vehicle-mounted wireless terminal, a portable device, a wearable device (for example, a watch and an electronic bracelet), a mobile phone (or referred to as a "cellular" phone), a portable terminal, a pocket-sized terminal, a handheld terminal, or the like. For example, the electronic device may be a personal communication service (personal communication service, PCS) phone, a cordless telephone, a session initiation protocol (SIP) phone, a wireless local loop (wireless local loop, WLL) station, a personal digital assistant (personal digital assistant, PDA), or another device. The wireless terminal may alternatively be a subscriber unit (subscriber unit), an access terminal (access terminal), a user terminal (user terminal), a user agent (user agent), a user device (user device), or user equipment (user equipment, UE). A type of the electronic device is not limited in this application.

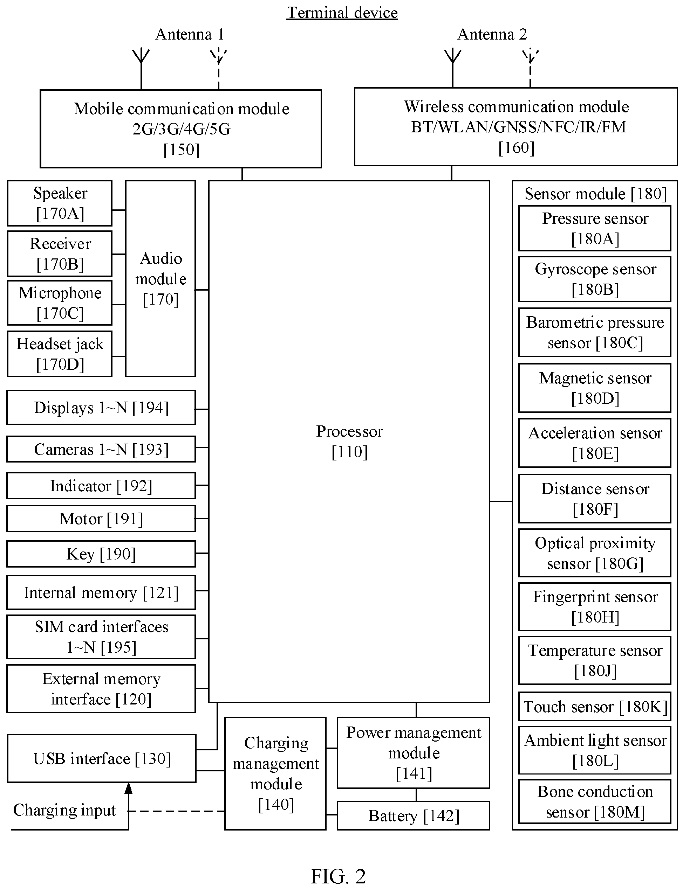

For example, the electronic device is a mobile phone. In this embodiment, a structure of the electronic device may be shown in FIG. 2. FIG. 2 is a schematic diagram of a structure applying an electronic device according to an embodiment of this application.

As shown in FIG. 2, the electronic device may include a processor 110, an external memory interface 120, an internal memory 121, a universal serial bus (universal serial bus, USB) interface 130, a charging management module 140, a power management module 141, a battery 142, a sensor module 180, a key 190, a motor 191, an indicator 192, a camera 193, a display 194, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

Further, when the electronic device is a mobile phone, the electronic device may further include an antenna 1, an antenna 2, a mobile communication module 150, a wireless communication module 160, an audio module 170, a speaker 170A, a receiver 170B, a microphone 170C, a headset jack 170D, a subscriber identification module (subscriber identification module, SIM) card interface 195, and the like.

It may be understood that the structure shown in this embodiment does not specifically limit the electronic device. In some other embodiments, the electronic device may include more or fewer components than those shown in the figure, or combine some components, or split some components, or have different component arrangements. The components shown in the figure may be implemented by hardware, software, or a combination of software and hardware.

The processor 110 may include one or more processing units, and different processing units may be separate components or may be integrated into one or more processors. A memory may be further disposed in the processor 110 to store instructions and data.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The charging management module 140 is configured to receive a charging input from a charger. The power management module 141 is configured to be connected to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

The mobile communication module 150 may provide a wireless communication solution applied to the electronic device, including 2G/3G/4G/5G and the like. The wireless communication module 160 may provide a solution for wireless communication that is applied to the electronic device and that includes a wireless local area network (wireless local area networks, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like. In some embodiments, the antenna 1 and the mobile communication module 150 in the electronic device are coupled, and the antenna 2 and the wireless communication module 160 are coupled, so that the electronic device can communicate with a network and another device by using a wireless communication technology.

The electronic device implements a display function by using a graphics processing unit (graphics processing unit, GPU), the display 194, an application processor, and the like. The GPU is a microprocessor for image processing, and is connected to the display 194 and the application processor. The GPU is configured to perform mathematical and geometric computing for graphics rendering. The processor 110 may include one or more GPUs that execute program instructions to generate or change display information.

The display 194 is configured to display an image, a video, and the like. The display 194 includes a display panel. A series of graphical user interfaces (graphical user interface, GUI) may be displayed on the display 194 of the electronic device, and all these GUIs are main screens of the electronic device.

The electronic device may implement a photographing function by using the ISP, the camera 193, the video codec, the GPU, the display 194, the application processor, and the like.

The external memory interface 120 may be configured to connect to an external memory card, for example, a Micro SD card, to expand a storage capacity of the electronic device. The external memory card communicates with the processor 110 through the external memory interface 120, to implement a data storage function. The internal memory 121 may be configured to store computer-executable program code, and the executable program code includes instructions. The processor 110 runs the instructions stored in the internal memory 121, to perform various function applications and data processing of the electronic device.

The electronic device may implement an audio function by using the audio module 170, the speaker 170A, the receiver 170B, the microphone 170C, the headset jack 170D, the application processor, and the like. For example, music playing and recording are implemented.

The audio module 170 is configured to convert digital audio information into an analog audio signal for output, and is further configured to convert an analog audio input into a digital audio signal. The audio module 170 may be further configured to encode and decode an audio signal. In some embodiments, the audio module 170 may be disposed in the processor 110 or some functional modules of the audio module 170 may be disposed in the processor 110.

The speaker 170A, also referred to as a "loudspeaker", is configured to convert an audio electrical signal into a sound signal. The electronic device may be configured to listen to music or answer a call in a hands-free mode by using the speaker 170A. The receiver 170B, also referred to as an "earpiece", is configured to convert an audio electrical signal into a sound signal. The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. The headset jack 170D is configured to connect to a wired headset.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The gyroscope sensor 180B may be configured to determine a motion posture of the electronic device. The barometric pressure sensor 180C is configured to measure barometric pressure. The magnetic sensor 180D includes a Hall sensor. The electronic device may detect opening and closing of a flip leather case by using the magnetic sensor 180D. The acceleration sensor 180E may detect magnitudes of acceleration of the electronic device in various directions (usually on three axes). The distance sensor 180F is configured to measure a distance. The optical proximity sensor 180G may include a light-emitting diode (LED) and an optical detector. The ambient light sensor 180L is configured to sense ambient light brightness. The fingerprint sensor 180H is configured to collect a fingerprint. The temperature sensor 180J is configured to detect a temperature. The touch sensor 180K is also referred to as a "touch device". The touch sensor 180K may be disposed in the display 194. The touch sensor 180K and the display 194 form a touchscreen, also referred to as a "touch control screen". The bone conduction sensor 180M may obtain a vibration signal. The key 190 includes a power-on/off key, a volume key, or the like. The key 190 may be a mechanical key, may be a touch key, or may be a virtual key. The motor 191 may generate a vibration prompt. The indicator 192 may be an indicator light, may be configured to indicate a charging status or a power change, and may be further configured to indicate a message, a missed incoming call, a notification, and the like. The SIM card interface 195 is configured to connect to a SIM card.

In addition, an operating system runs on the foregoing components, for example, an iOS operating system developed by Apple Inc., an Android open source operating system developed by Google Inc., or a Windows operating system developed by Microsoft Corporation. An application may be installed and run on the operating system.

To clarify functional operations performed by various software architectures within the electronic device when the electronic device executes the solutions disclosed in this application, an embodiment of this application further discloses a software structure of the electronic device.

An operating system of the electronic device may use a layered architecture, an event-driven architecture, a microkernel architecture, a microservice architecture, a cloud architecture, or the like. In this embodiment of this application, an Android system with a layered architecture is used as an example to describe a software structure of the electronic device.

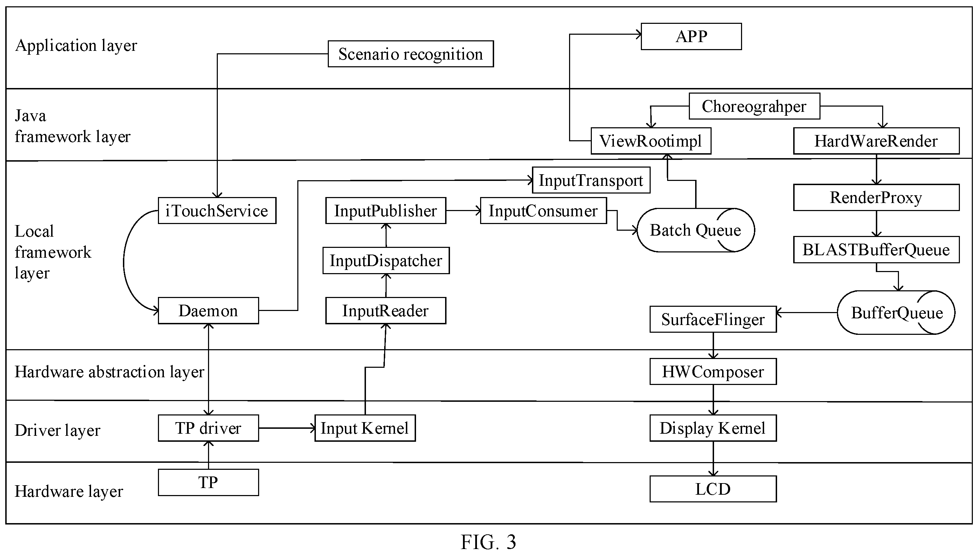

FIG. 3 is a block diagram of a software structure of an implementation of an electronic device provided in this application. Referring to FIG. 3, in the layered architecture, software is divided into several layers, and each layer has a clear role and task. The layers communicate with each other by using software interfaces. In some embodiments, the Android system is divided into four layers from top to bottom: an application layer (APP layer), an application framework layer (FWK layer), a hardware abstraction layer (hardware abstraction layer, HAL), and a driver layer (Driver layer), where the driver layer is connected to a hardware layer (Hardware layer).

The application layer (APP layer) may include a series of application packages.

The application packages may include applications such as Camera, Gallery, Calendar, Phone, Map, Navigation, WLAN, Bluetooth, Music, Videos, and Messages. In addition, the application layer may further include another application module, such as a game, shopping, reading, or communication application module (APP module) installed by a user.

As shown in FIG. 3, in this embodiment of this application, the electronic device may display a corresponding scenario of the APP by running the application module included in the application layer. In addition, the application layer may further include a scenario recognition application, which can recognize a scenario displayed by the electronic device and recognize a frame rate at which the electronic device displays the scenario.

The application framework layer (FWK layer) provides an application programming interface (application programming interface, API) and a programming framework for an application at the application layer. The application framework layer includes some predefined functions.

The application framework layer may include a window manager, a content provider, a view system, a phone manager, a resource manager, a notification manager, and the like.

The window manager is configured to manage a window program. The window manager may obtain a display size, determine whether there is a status bar, lock a screen, take a screenshot, and the like.

The content provider is configured to store and obtain data, and enable the data to be accessible to an application. The data may include a video, an image, audio, calls that are made and answered, a browsing history and bookmarks, a phone book, and the like.

The view system includes visual controls such as a text display control and a picture display control. The view system may be configured to build an application. A display interface may include one or more views. For example, a display interface including an SMS notification icon may include a view for displaying text and a view for displaying a picture.

The phone manager is configured to provide a communication function of the electronic device, for example, call status management (including answering, hanging up, and the like).

The resource manager provides various resources for an application, for example, a localized string, an icon, a picture, a layout file, and a video file.

The notification manager enables an application to display notification information in the status bar, and may be configured to convey a notification-type message. The displayed notification information may automatically disappear after a short stay without user interaction. For example, the notification manager is configured to provide a notification of download completion, a message reminder, and the like. The notification manager may alternatively be a notification that appears in the status bar at the top of the system in a form of a graph or scroll bar text, for example, a notification of an application running in the background, or a notification that appears on the screen in a form of a dialog window. For example, text information is prompted in the status bar, an alert sound is made, the electronic device vibrates, or an indicator light blinks.

As shown in FIG. 3, in this embodiment of this application, the FWK layer may be further divided into an FWK-Java layer (Java framework layer) and an FWK-Native layer (local framework layer) from top to bottom. The FWK-Java layer includes ViewRootimpl (ViewRootimpl) and a first image frame determining module. The FWK-Native layer includes a second image frame determining module.

Further, referring to FIG. 3, the first image frame determining module may include a choreographer module (Choreograhper module) and a hardware render module (HardWareRender module), and the second image frame determining module may include a render proxy module (RenderProxy module), a blast buffer queue module (BLASTBufferQueue module), a buffer queue (BufferQueue), and a composer module (SurfaceFlinger module).

In addition, referring to FIG. 3, the FWK-Native layer further includes a touch service module (iTouchService module), a daemon module (Daemon module), and an input processing module.

Further, referring to FIG. 3, the input processing module may include an input reader module (InputReader module), an input dispatcher (InputDispatcher) module, an input publisher module (InputPublisher module), and an input consumer module (InputConsumer module) from bottom to top.

The FWK layer may further include an input transport module (InputTransport module) and a batch queue (BatchQueue). The input transport module may be disposed at the FWK-Java layer, or may be disposed at the FWK-Native layer. Correspondingly, the batch queue may also be disposed at the FWK-Java layer, or may be disposed at the FWK-Native layer.

The HAL is an abstract interface for a kernel driver of the device, and provides a higher-level java API framework with an application interface for accessing an underlying device. The hardware abstraction layer may include a plurality of library modules, such as a display module, an audio module, a Bluetooth module, and a Wi-Fi module. Each module may implement an interface for a specific type of hardware component. When the framework API requests to access hardware of the device, the Android system loads a library module for the hardware component.

Referring to FIG. 3, in this embodiment of this application, the HAL may include a hardware composer module (Hardware Composer, HWComposer module).

The driver layer (Driver layer) is a layer between hardware and software. The driver layer may include a display driver, a camera driver, an audio driver, a sensor driver, and the like.

Referring to FIG. 3, the driver layer may further include a touch panel driver (TP Driver), an input kernel (Input Kernel), and a display kernel (Display Kernel).

In addition, a hardware layer (Hardware layer) may be disposed below the driver layer. The hardware layer may include a touch panel (TP) and a display. The display may include a liquid crystal display (liquid crystal display, LCD), and the like.

In the above example, the software system of the electronic device uses a layered architecture as the Android system. Certainly, the software system of the electronic device may alternatively use another architecture. This is not limited in this application.

The screen display method provided in the embodiments of this application is described in detail below with reference to software and hardware of the electronic device, by using a scenario in which the electronic device displays an interface of a target scenario through the screen as an example.

While a target scenario is displayed on the screen of the electronic device, the user performs a touch operation on the screen of the electronic device. A corresponding touchscreen signal is generated when the user's finger touches the screen, the touch sensor in the TP may detect the touchscreen signal and generate a plurality of touch events based on the touchscreen signal. The touch events may include touch coordinates at which the user's finger touches the screen when the touchscreen signal is generated, and moments when the touch events are generated. In the solutions provided in the embodiments of this application, a touch event generated based on a touch operation is referred to as a first touch event. In this case, the plurality of touch events generated based on the touchscreen signal are first touch events.

After the first touch events are generated, the TP may transmit the first touch events to the touch panel driver (TP Driver) at the driver layer, then the TP Driver transmits the first touch events to the input kernel (Input Kernel) at the driver layer, and the Input Kernel transmits the first touch events to the batch queue (BatchQueue) at the FWK layer step by step.

If the FWK layer includes an input processing module, and the input processing module includes an input reader module (InputReader module), an input dispatcher module (InputDispatcher), an input publisher module (InputPublisher module), and an input consumer module (InputConsumer module) from bottom to top, during transmission of the first touch events, the Input Kernel transmits the first touch events to the InputReader module, then the InputReader module transmits the first touch events to the InputDispatcher module, the InputDispatcher module transmits the received first touch events to the InputPublisher module, the InputPublisher module then transmits the received first touch events to the InputConsumer module, and then, the InputConsumer module transmits the first touch events to the BatchQueue.

In addition, the scenario recognition module at the application layer may recognize the target scenario, and determines a frame rate at which the electronic device displays the target scenario. The frame rate is a quantity of pictures of the target scenario displayed per unit time. Then, the scenario recognition transmits the frame rate to the touch service module (iTouchService module) at the FWK layer, and the iTouchService module transmits the frame rate to the daemon module (Daemon module) at the FWK layer; and after receiving the frame rate, the daemon module transmits the frame rate to the input transport module (InputTransport module) at the FWK layer.

After obtaining a touch event, the BatchQueue can read the frame rate from the InputTransport module, and redetermine, based on a frame rate at which the electronic device displays the target scenario, the first touch event corresponding to the touch operation, and a reporting rate of the electronic device, a second touch event adapted to the frame rate.

After determining the second touch event, the BatchQueue may transmit the second touch event to the view root implementation (ViewRootimpl) module, and then the ViewRootimpl reports the second touch event to the first image frame determining module. The first image frame determining module and the second image frame determining module perform operations of drawing, compositing, and rendering based on the second touch event to obtain an image frame corresponding to the second touch event.

While an image frame is generated, a layer is first drawn based on the second touch event, and the drawn layer may be stored in the buffer queue (BufferQueue). Then, the composer module (SurfaceFlinger module) reads corresponding layers from the BufferQueue, and composites and renders the read layers to obtain a corresponding image frame.

After the corresponding image frame is generated, the display displays an interface corresponding to the target scenario based on the image frame.

The screen display method provided in this application may be implemented through coordination of all layers of the software architecture. In this application, because the interface corresponding to the target scenario is displayed through the second touch event, and the second touch event is adapted to the frame rate for the target scenario, pictures displayed by the electronic device are smooth, and touch responsiveness is high, which can meet a requirement of the user for touch responsiveness.

To make the solutions provided in this application clear, the solutions provided in this application are described below through embodiments with reference to the accompanying drawings.

To improve touch responsiveness of an electronic device, embodiments of this application provide a screen display method, an apparatus, and an electronic device.

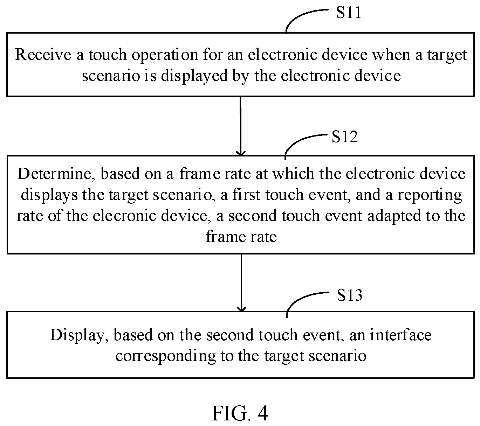

Referring to FIG. 4, the screen display method provided in this embodiment of this application includes the following steps.

Step S11: Receive a touch operation for an electronic device when a target scenario is displayed by the electronic device.

The touch operation may be a tap operation, a slide operation, a click operation, a long press operation, a double-tap operation, a zoom operation, or the like for the touch panel. This is not limited in the embodiments of this application.

The electronic device may display a plurality of scenarios. For example, the electronic device may display a game scenario when running a game application, and may display a corresponding item display scenario when running a shopping application. The target scenario may be any scenario displayed by the electronic device. The electronic device may display a corresponding book page display scenario when running a reading application.

In addition, when the electronic device displays different scenarios, the user often has different requirements for touch responsiveness. For example, to achieve good game experience, if the electronic device displays an intense battle game scenario, smoother game pictures cause more timely response of the screen and better user experience, then the user expects that the electronic device has high touch responsiveness in this scenario. However, if the electronic device displays a relatively slow-paced chess game scenario, the user has a low requirement for touch responsiveness.

Step S12: Determine, based on a frame rate at which the electronic device displays the target scenario, a first touch event, and a reporting rate of the electronic device, a second touch event adapted to the frame rate.

In this embodiment of this application, the second touch event is adapted to the frame rate, which means that a higher frame rate causes a shorter time interval between adjacent second touch events, that is, adjacent second touch events are closer. The time interval between adjacent second touch events is duration between the second moments corresponding to adjacent second touch events.

A first touch event is a touch event generated based on a touch operation. After the electronic device receives a touch operation, the touch panel of the electronic device may generate a corresponding touch event based on a touchscreen signal corresponding to the touch operation.

In addition, the first touch event includes a first moment corresponding to the first touch event and first touch coordinates corresponding to the first touch event. The first moment corresponding to the first touch event may be a moment when the first touch event is generated, or may be a moment when the electronic device receives the touch operation corresponding to the first touch event. The first touch coordinates are coordinates of a position at which the user's finger touches the touch panel when the electronic device receives the touch operation corresponding to the first touch event.

Correspondingly, a second touch event includes a second moment corresponding to the second touch event and second touch coordinates corresponding to the second touch event.

The second touch event is a touch event redetermined based on the frame rate at which the electronic device displays the target scenario, the first touch event, and the reporting rate of the electronic device, rather than a touch event generated based on an actual touch operation, that is, the second touch event is a touch event corresponding to a simulated touch operation. The second moment corresponding to the second touch event may be a moment when the second touch event is generated based on a simulated touch operation, or the second moment corresponding to the second touch event may be a moment when the electronic device receives the simulated touch operation. The second touch coordinates are coordinates of a position at which the user's finger touches the touch panel when the electronic device receives the simulated touch operation corresponding to a touch event.

In addition, in this application, the frame rate is a quantity of pictures displayed per second by the electronic device.

Step S13: Display, based on the second touch event, an interface corresponding to the target scenario.

According to the screen display method provided in this embodiment of this application, when the target scenario is displayed by the electronic device, the second touch event adapted to the frame rate is determined based on the first touch event corresponding to the received touch operation, the frame rate at which the electronic device displays the target scenario, and the reporting rate of the electronic device, and the interface corresponding to the target scenario is displayed based on the second touch event.

That is, according to the solutions provided in the embodiments of this application, the second touch event is redetermined on the basis of the first touch event instead of directly displaying the interface based on the first touch event, and the second touch event is adapted to the frame rate at which the electronic device displays the target scenario, that is, the frame rate for the target scenario is considered when the electronic device displays the interface, so that the second touch event for interface display can be determined based on the frame rate for the target scenario. Therefore, touch responsiveness can be improved even if a sampling rate and a reporting rate of the electronic device are low.

For example, if the frame rate at which the electronic device displays the target scenario is high, adjacent second touch events are close to each other, a time interval between adjacent second touch events is shorter than a time interval between adjacent first touch events, and a frequency of generating an image frame by using the second touch event is higher than that by using the first touch event. Therefore, when an interface is displayed based on the second touch event, the interface displayed by the electronic device is smoother, and corresponding touch responsiveness is higher.

Further, when the second touch event is determined, the solution provided in this embodiment of this application comprehensively considers the frame rate at which the electronic device displays the target scenario, the first touch event, and the reporting rate of the electronic device, so as to redetermine the second touch event adapted to the frame rate, that is, the solution provided in this embodiment of this application can dynamically adapt to a corresponding second touch event based on a frame rate. In this case, if a sampling rate and a reporting rate of the electronic device are high, and the frame rate at which the electronic device displays the target scenario is low, a time interval between adjacent second touch events that is determined by using the solution provided in this embodiment of this application is longer than a time interval between adjacent first touch events, and a frequency of generating an image frame by using the second touch event is lower than that by using the first touch event, so that power consumption of the electronic device can be reduced while ensuring touch responsiveness.

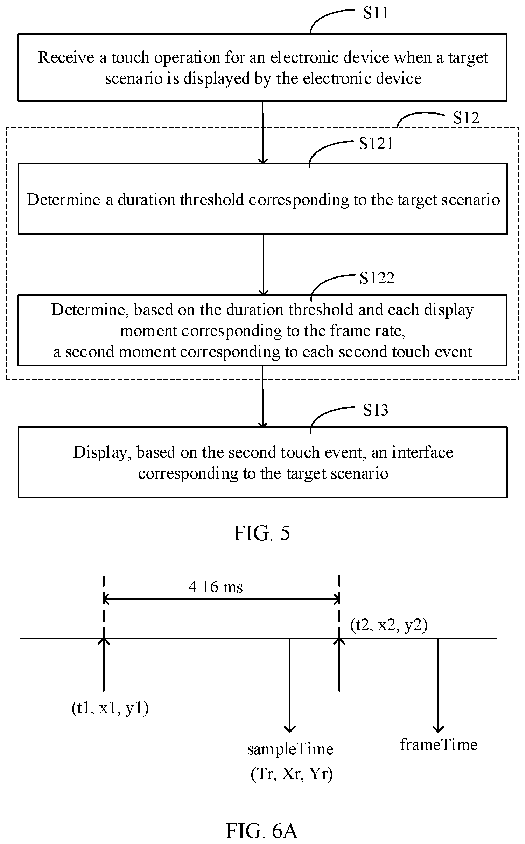

An operation of determining, based on the frame rate at which the electronic device displays the target scenario, the first touch event, and the reporting rate of the electronic device, a second touch event adapted to the frame rate is provided in the solution provided in this embodiment of this application. Referring to the schematic flowchart shown in FIG. 5, in a feasible implementation, the operation may include the following steps.

Step S121: Determine a duration threshold corresponding to the target scenario.

In a feasible design, the duration threshold may be determined in the following manner.

The duration threshold corresponding to the target scenario is determined based on a correspondence between different frame rate ranges and different duration thresholds, and the frame rate at which the electronic device displays the target scenario.

In this design, a correspondence between different frame rate ranges and different duration thresholds may be established, and then the duration threshold is determined based on the correspondence, and a duration range in which the frame rate for the target scenario is located.

In this embodiment of this application, the duration threshold is usually shorter if it is expected that touch responsiveness of the electronic device is higher, and then a correspondence between different frame rate ranges and different duration thresholds may be set based on a requirement of the user for touch responsiveness. For example, if the user has a high requirement for touch responsiveness, a duration threshold corresponding to a frame rate range may be set to 1 ms; or if the user has a low requirement for touch responsiveness, a duration threshold corresponding to the frame rate range may be set to 5 ms.

Alternatively, in another feasible design, the duration threshold may be determined in the following manner.

The duration threshold corresponding to the target scenario is determined based on a correspondence between different application types and different duration thresholds, and an application type corresponding to the target scenario.

In this design, types of applications may be preset. For example, the types of applications that may be set include game applications, shopping applications, reading applications, and the like. In another example, the types of applications may be further subclassified on this basis. For example, the game applications may be further classified into racing game applications, battle game applications, puzzle game applications, and the like.

Because the user has different requirements for touch responsiveness when target scenarios of different application types are displayed by the electronic device, in this design, a correspondence between different application types and different duration thresholds may be set, and then duration thresholds corresponding to the target scenarios are determined based on application types to which the target scenarios belong.

In this embodiment of this application, the duration threshold is usually shorter if it is expected that touch responsiveness of the electronic device is higher, and then a correspondence between different application types and different duration thresholds may be set based on requirements of the user for touch responsiveness for different types of applications. For example, if the user has a high requirement for touch responsiveness for one type of applications, a duration threshold corresponding to the application type may be set to 1 ms; or if the user has a low requirement for touch responsiveness for another type of applications, a duration threshold corresponding to the another application type may be set to 5 ms.

With the foregoing design, the duration threshold corresponding to the target scenario may be determined based on the frame rate at which the electronic device displays the target scenario, or an application type corresponding to the target scenario.

Step S122: Determine, based on the duration threshold and each display moment corresponding to the frame rate, a second moment corresponding to each second touch event, where duration between the display moment and the second moment is not less than the duration threshold.

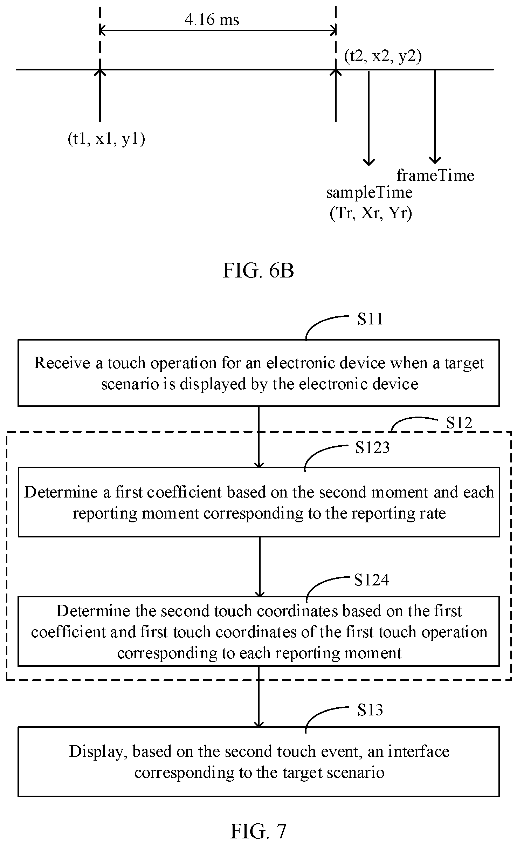

To clarify the solution for determining a second moment corresponding to a second touch event, the embodiments of this application provide FIG. 6A and FIG. 6B. In examples corresponding to FIG. 6A and FIG. 6B, a horizontal axis represents a time axis, and duration between t1 and t2 is one reporting period, where t1 is a start moment of the reporting period, t2 is an end moment of the reporting period, and a reporting rate of an electronic device is 240 Hz. In this case, the electronic device reports at an interval of 4.16 ms, and the duration between t1 and t2 is 4.16 ms.

In addition, in the two examples, frameTime is set to be a display moment determined based on a frame rate. The frame rate is a quantity of pictures displayed per second. Based on the frame rate, a moment when the electronic device displays each interface may be determined, and the moment is the display moment.

If sampleTime is set to a second moment corresponding to a second touch event, duration between the frameTime and the sampleTime is not less than the duration threshold.

In an optional design, duration between the display moment frameTime and the second moment sampleTime corresponding to the second touch event may be set to be equal to the duration threshold. In this case, when the frame rate at which the electronic device displays the target scenario is fixed, an interval between second moments corresponding to second touch events remains unchanged. Because the electronic device generates and displays a corresponding interface based on the second touch event, the interval between the second moments corresponding to the second touch events remains unchanged, so that changes in interfaces displayed by the electronic device can be kept at a stable frequency, and user experience can be correspondingly improved.

In addition, comparing the two examples shown in FIG. 6A and FIG. 6B, it is expected that touch responsiveness of the electronic device is higher in the example shown in FIG. 6B. Therefore, a duration threshold in the example shown in FIG. 6A may be set to be less than that in the example shown in FIG. 6A.

According to this embodiment of this application, a corresponding duration threshold may be determined based on a target scenario, so that the duration threshold can be related to the target scenario, thereby improving adaptability of the second touch event to the target scenario. In addition, if the second moment is determined based on the duration threshold and each display moment corresponding to the frame rate, determination of the second moment also considers the frame rate at which the electronic device displays the target scenario, so that adaptability of the second touch event to the target scenario can be further improved.

An operation of determining, based on the frame rate at which the electronic device displays the target scenario, the first touch event, and the reporting rate of the electronic device, a second touch event adapted to the frame rate is provided in the solution provided in this embodiment of this application. Referring to the schematic flowchart shown in FIG. 7, in a feasible implementation, the operation may include the following steps.

Step S123: Determine a first coefficient based on the second moment and each reporting moment corresponding to the reporting rate.

In a feasible design, the first coefficient may be determined in the following manner.

First, a first difference and a second difference are determined separately, where the first difference is a difference between a second reporting moment and a first reporting moment, the second reporting moment and the first reporting moment are adjacent reporting moments, the second reporting moment is later than the first reporting moment, and the second difference is a difference between the second reporting moment and a second moment corresponding to the second reporting moment. The second moment corresponding to the second reporting moment is a second moment corresponding to a second touch event determined based on the first moment and the second moment.

Then, a ratio of the second difference to the first difference is determined, where the ratio is the first coefficient.

For example, the first coefficient may be determined in the following manner:

For example, the first coefficient may be determined in the following manner:

$$alpha = float(t2 - sampleTime)/(t2 - t1) \quad \text{formula (1)}.$$

alpha is the first coefficient, t1 is the first reporting moment, and t2 is the second reporting moment; duration between t2 and t1 is duration of one reporting period, for example, if the reporting rate is 120 Hz, then (t2-t1) is 8.33 ms, and if the reporting rate is 240 Hz, then (t2-t1) is 4.16 ms; frameTime is a display moment; sampleTime is a second moment corresponding to a second touch event; float represents a floating-point type; (t2-t1) represents the first difference, and (t2-sampleTime) represents the second difference.

It may be learned from formula (1) that in the example shown in FIG. 6A, the first coefficient is greater than 0, and in the example shown in FIG. 6B, the first coefficient is less than 0.

Step S124: Determine the second touch coordinates based on the first coefficient and first touch coordinates of the first touch operation corresponding to each reporting moment.

In a feasible design, if the first coefficient is greater than 0, determining of the second touch coordinates based on the first coefficient and first touch coordinates of the first touch operation corresponding to each reporting moment includes:

first, determining first products of second coordinates and the first coefficient, and determining second products of first coordinates and a second coefficient, where the first coordinates are first touch coordinates of the first touch operation corresponding to the first reporting moment, the second coordinates are first touch coordinates of the first touch operation corresponding to the second reporting moment, and the second coefficient is a difference between 1 and the first coefficient; and

then, determining sums of the first products and the second products, where the second touch coordinates are the sums of the first products and the second products.

If the first coefficient is greater than 0, this case may correspond to the example shown in FIG. 6A. In this case, the second touch coordinates may be determined in the following manner:

$$Xr = x2 * alpha + x1 * (1 - alpha) \quad \text{formula (2)};$$

$$Yr = y2 * alpha + y1 * (1 - alpha) \quad \text{formula (3)}.$$

In the foregoing formulas, alpha is the first coefficient; Xr is a horizontal coordinate in the second touch coordinates; Yr is a vertical coordinate in the second touch coordinates; x1 is a horizontal coordinate in the first touch coordinates of the first touch operation corresponding to the first reporting moment; y1 is a vertical coordinate in the first touch coordinates of the first touch operation corresponding to the first reporting moment; x2 is a horizontal coordinate in the first touch coordinates of the first touch operation corresponding to the second reporting moment; y2 is a vertical coordinate in the first touch coordinates of the first touch operation corresponding to the second reporting moment; and (1-alpha) is the second coefficient.

In a feasible design, if the first coefficient is less than 0, determining of the second touch coordinates based on the first coefficient and first touch coordinates of the first touch operation corresponding to each reporting moment includes:

first, determining third products of the first coordinates and the first coefficient, and determining fourth products of the second coordinates and the second coefficient; and

then, determining sums of the third products and the fourth products, where the second touch coordinates are the sums of the third products and the fourth products.

If the first coefficient is less than 0, this case may correspond to the example shown in FIG. 6B. In this case, the second touch coordinates may be determined in the following manner:

$$Xr = x1 * alpha + x2 * (1 - alpha) \quad \text{formula (4);}$$

$$Yr = y1 * alpha + y2 * (1 - alpha) \quad \text{formula (5).}$$

The foregoing formula (2) to formula (5) respectively provide a solution for determining second touch coordinates in two cases in which the first coefficient is greater than 0 and the first coefficient is less than 0. In addition, an algorithm of formula (2) and formula (3) may be referred to as interpolation, considering the case in which the first coefficient is greater than 0; and an algorithm of formula (4) and formula (5) may be referred to as extrapolation, considering the case in which the first coefficient is less than 0. That is, dynamically adaptive adjustment can be performed on an algorithm used in the solution provided in this embodiment of this application, and interpolation and extrapolation may be combined, so that the obtained second touch event is adapted to the frame rate at which the electronic device displays the target scenario, thereby improving touch responsiveness of the electronic device.

If it is assumed in FIG. 6A and FIG. 6B that the first touch event at the first reporting moment is represented as (t1, x1, y1), the first touch event at the second reporting moment is represented as (t2, x2, y2), and Tr=sampleTime, the second touch event may be represented as (Tr, Xr, Yr).

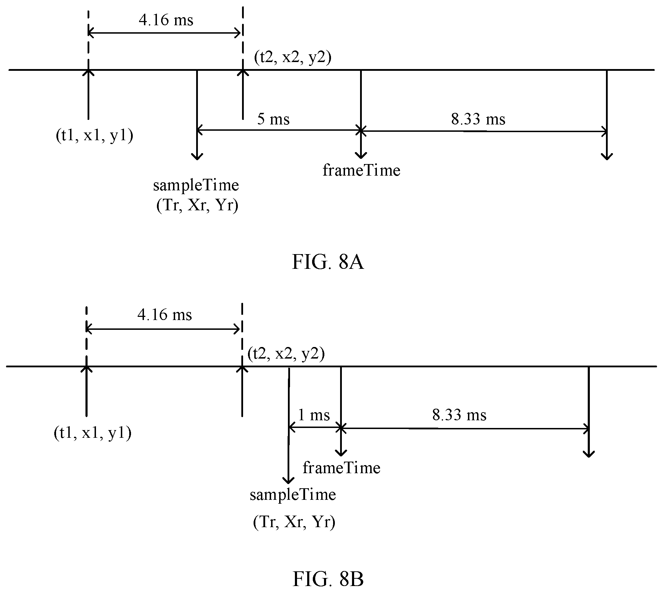

To clarify advantages of this application, FIG. 8A and FIG. 8B are disclosed. In examples corresponding to FIG. 8A and FIG. 8B, a horizontal axis represents a time axis, and a reporting rate of an electronic device is 240 Hz. In this case, the electronic device reports at an interval of 4.16 ms, and duration between t1 and t2 is 4.16 ms. In addition, if a frame rate at which the electronic device displays a target scenario is 120 Hz, duration between adjacent display moments corresponding to the frame rate is 8.33 ms.

If it is assumed that a requirement for touch responsiveness in the example corresponding to FIG. 8A is lower than that in the example corresponding to FIG. 8B, and a duration threshold in the example is 5 ms, then Tr is less than t2, a target coefficient is greater than 0, and a second moment Tr of a second touch event is between t1 and t2; or if it is assumed that a requirement for touch responsiveness in the example corresponding to FIG. 8B is higher than that in the example corresponding to FIG. 8A, and a duration threshold is 1 ms, then Tr is greater than t2, a target coefficient is less than 0, and a second moment Tr of a second touch event is later than t2.

In addition, in a feasible implementation of this application, the following condition may be satisfied by setting a suitable duration threshold.

First duration is twice second duration, where the first duration is duration of a reporting period corresponding to a reporting rate of the electronic device, and the second duration is duration between the second moments respectively corresponding to two adjacent second touch events.

In this case, a second touch event is located between two first touch events corresponding to adjacent reporting moments, so that the electronic device can have good touch responsiveness.

An operation of displaying, based on a second touch event, an interface corresponding to a target scenario is disclosed in step S13 in this application. In a feasible implementation, step S13 may be implemented in the following manner.

Step 1: Generate a corresponding image frame based on the second touch coordinates corresponding to the second touch event.

For example, if the second touch event is to drag an icon to change a display position of the icon on the screen, then in the generated image frame, the display position of the icon is a changed position.

Step 2: Determine, when the electronic device refreshes at a refresh rate, the image frame refreshed in a same refresh period.

The electronic device refreshes at a corresponding refresh rate, and refreshes one or more image frames in each refresh period. For example, if a refresh rate of the electronic device is 120 Hz, the electronic device refreshes at an interval of 8.33 ms, that is, each refresh period is 8.33 ms, and one or more image frames may be refreshed in one refresh period.

Step 3: Generate a corresponding interface based on a target image frame refreshed in the same refresh period, and display the interface, where the target image frame is generated based on a target touch event, and in the second touch event corresponding to the image frame refreshed in the refresh period, the second moment corresponding to the target touch event is the latest.

If one image frame is obtained in a refresh period, the display of the electronic device may display an interface corresponding to the image frame. In addition, if a plurality of image frames are obtained in a refresh period, and each image frame is generated by using a corresponding second touch event, that is, the plurality of image frames obtained in the refresh period are generated by a plurality of second touch events, the electronic device may generate a corresponding interface based on the image frame corresponding to the latest determined second touch event, and display the interface.

In this case, second moments that correspond respectively to the plurality of second touch events corresponding to the plurality of image frames obtained in the refresh period may be determined, where the second touch event corresponding to the latest second moment is a target touch event, and the image frame generated based on the target touch event is a target image frame. The electronic device may generate a corresponding interface based on the target image frame, and display the interface.

Because the target image frame is generated based on the target touch event, the interface of the electronic device is displayed correspondingly based on the latest determined second touch event, so that duration from a moment when the electronic device receives a touch operation to a moment when a corresponding picture is displayed on the screen can be reduced, thereby correspondingly improving touch responsiveness of the electronic device.

An operation of determining, based on the frame rate at which the electronic device displays the target scenario, the first touch event, and the reporting rate of the electronic device, a second touch event adapted to the frame rate is provided in step S12 in the solution provided in this embodiment of this application. In a feasible implementation, the operation may be implemented by the following steps.

First, a third touch event in the first touch event is determined, where the first touch event includes the third touch event and a fourth touch event, the fourth touch event is a touch event generated based on first n touchscreen signals, and n is a positive integer.

Then, based on the frame rate at which the electronic device displays the target scenario, the third touch event, and a reporting rate of the electronic device, a second touch event adapted to the frame rate is determined.

That is, the fourth touch event in the first touch event may be deleted, with only the third touch event remained, and the second touch event is determined based on the remained third touch event. For example, n may be 1 or 2. Certainly, n may alternatively be another positive integer. This is not limited in this embodiment of this application.

Because the fourth touch event is a touch event generated based on the first n touchscreen signals, that is, the fourth touch event is a touch event generated based on earlier touchscreen signals, after the fourth touch event is generated, the user's finger often moves to another position, and thus there is no need to determine the second touch event through the fourth touch event. With this solution, lag in display of an interface on the screen can be reduced, thereby further improving touch responsiveness of the electronic device.

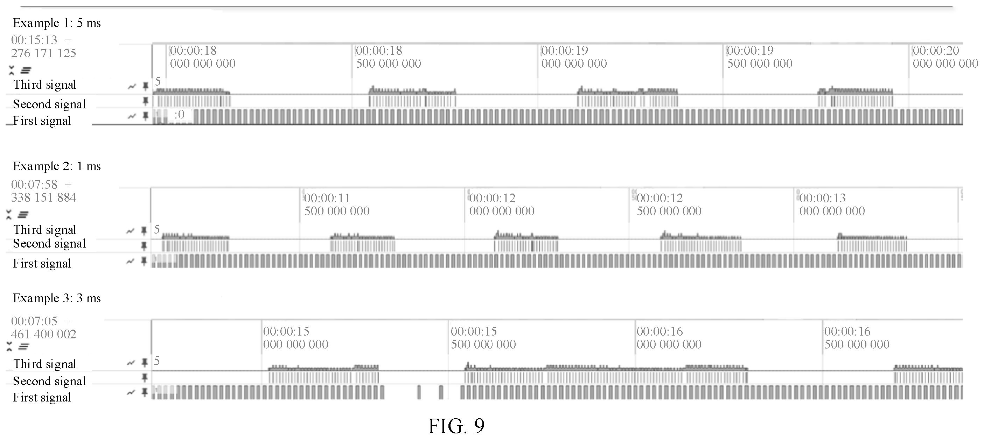

To clarify advantages of this application, an embodiment of this application further provides FIG. 9. FIG. 9 is an example diagram of signals generated by an electronic device. Referring to FIG. 9, three signal diagrams respectively correspond to three examples. In the three examples, the electronic device displays a same target scenario. In the first example, a duration threshold is 5 ms, in the second example, a duration threshold is 1 ms, and in the third example, a duration threshold is 3 ms. In addition, each example includes three types of signals, and a horizontal axis of the three types of signals represents time.

A first signal is a VSYNC-app signal generated at the application layer. In the software architecture corresponding to FIG. 3, the first signal may be a signal generated by the application module (APP module) at the application layer. In the three examples, the electronic device displays a same target scenario, and the APP module performs a same operation. Therefore, differences in first signals in the three examples are small.

A second signal corresponds to a signal for reporting a second touch event. In the software architecture corresponding to FIG. 3, the second signal may be a signal (the signal may be referred to as a deliverInputEvent signal) for reporting a second touch event to the Choreograhper module by the ViewRootimpl.

A third signal corresponds to a signal corresponding to layers to be composited and rendered. In the software architecture corresponding to FIG. 3, the third signal may be a signal that is stored in the buffer queue (BufferQueue) and corresponds to layers to be composited and rendered.

It may be learned from FIG. 9 that, when duration thresholds are different, duration between the display moment frame Time and the sampleTime is different, quantities of second touch events are also different, and layers that are stored in a corresponding buffer queue (BufferQueue) and that are to be composited and rendered are also different. Correspondingly, compactness between the second signal and the third signal is also different.

If a scenario has a high requirement for touch responsiveness, a duration threshold corresponding to the scenario may be set to be low, where in the first example, the duration threshold is 5 ms, and in the second example, the duration threshold is 1 ms, so that touch responsiveness in the second example is often higher than that in the first example. It may be learned from FIG. 9 that, compared with the first example, there are more second touch events, and more layers that are stored in the buffer queue (BufferQueue) and that are to be composited and rendered in the second example, and compactness of both the second signal and the third signal is higher than that in the first example, which indicates that touch responsiveness in the second example is higher than that in the first example.

The following is an apparatus embodiment of this application, which can be used to perform the method embodiments of this application. For details not disclosed in the apparatus embodiment of this application, refer to the method embodiments of this application.

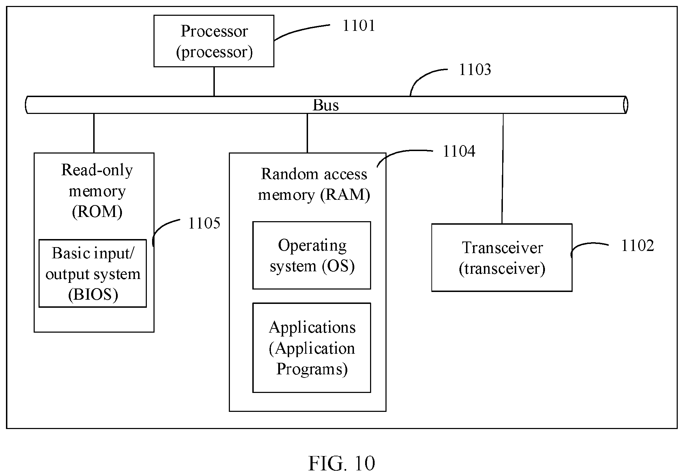

Corresponding to the foregoing embodiment of the screen display method, this application further provides an electronic device. Referring to a schematic diagram of a structure shown in FIG. 10, the electronic device includes:

> a processor 1101 and a memory,
> the memory is configured to store program instructions; and

the processor 1101 is configured to invoke and execute the program instructions stored in the memory, and when the program instructions stored in the memory are executed by the processor 1101, the electronic device is enabled to perform all or some of steps in corresponding embodiments of FIG. 4, FIG. 5, and FIG. 7.

Further, the electronic device further includes a transceiver 1102 and a bus 1103. The memory includes a random access memory 1104 and a read-only memory 1105.

The processor is separately coupled to the transceiver, the random access memory, and the read-only memory by using the bus. When the electronic device needs to run, a bootloader system solidified in a basic input/output system or an embedded system in the read-only memory boots a system to start, to bootstraps the electronic device to enter a normal running state. After the electronic device enters the normal running state, an application and an operating system run in the random access memory, to enable the electronic device to perform all or some of steps in the corresponding embodiments of FIG. 4, FIG. 5, and FIG. 7.

The electronic device in embodiments of the present invention may correspond to the electronic device in the corresponding embodiments of FIG. 4, FIG. 5, and FIG. 7. In addition, the processor, the memory, and the like in the electronic device may implement functions and/or steps and methods implemented by the electronic device in the corresponding embodiments of FIG. 4, FIG. 5, and FIG. 7. For brevity, details are not described herein again.

In a specific implementation, an embodiment of this application further provides a computer storage medium. The computer storage medium stores a computer program or instructions, and when the computer program or the instructions are executed, a computer is enabled to perform all or some of steps in the corresponding embodiments of FIG. 4, FIG. 5, and FIG. 7. The computer-readable storage medium is disposed in any device. The any device may be a random-access memory (random-access memory, RAM). The memory may alternatively include a non-volatile memory (non-volatile memory), for example, a read-only memory (read-only memory, ROM), a flash memory (flash memory), a hard disk drive (hard disk drive, HDD), or a solid-state drive (solid-state drive, SSD). The memory may alternatively include a combination of the foregoing types of memories.

An embodiment of this application further provides a chip system. The chip system includes a processor. The processor is coupled to a memory and configured to execute a computer program or instructions stored in the memory. When the computer program or the instructions are executed, the chip system may be enabled to perform all or some of steps in the corresponding embodiments of FIG. 4, FIG. 5, and FIG. 7. The chip system may include a chip, or may include a chip and another discrete device.

The various illustrative logical units and circuits described in the embodiments of this application may implement or operate the described functions by using a general-purpose processor, a digital information processor, an application specific integrated circuit (application specific integrated circuit, ASIC), a field programmable gate array (field programmable gate array, FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may alternatively be implemented by using a combination of computing apparatuses, such as a digital information processor and a microprocessor, a plurality of microprocessors, one or more microprocessors in combination with a digital information processor core, or any other similar configuration.

Steps of the methods or algorithms described in the embodiments of this application may be directly embedded into hardware, a software unit executed by a processor, or a combination thereof. The software unit may be stored in a random access memory (random access memory, RAM), a flash memory, a read-only memory (read-only memory, ROM), an erasable programmable read-only memory (erasable programmable read-only memory, EPROM), a register, a hard disk, a removable magnetic disk, a portable compact disc read-only memory (compact disc read-only memory, CD-ROM), or any other form of storage medium in the art. For example, the storage medium may be connected to a processor, so that the processor may read information from the storage medium and write information to the storage medium. Optionally, the storage medium may be integrated into a processor. The processor and the storage medium may be disposed in the ASIC, and the ASIC may be disposed in user equipment (user equipment, UE). Optionally, the processor and the storage medium may be alternatively disposed in different components of the UE.

It should be understood that sequence numbers of the foregoing processes do not mean execution sequences in various embodiments of this application. The performing sequences of the processes should be determined based on functions and internal logic of the processes, and should not constitute any limitation on the implementation processes of embodiments of this application.

All or some of the foregoing embodiments may be implemented by using software, hardware, firmware, or any combination thereof. When the software is used for implementation, some or all of the embodiments may be implemented in a form of a computer program product. The computer program product includes one or more computer instructions. When the computer program instructions are loaded and executed on a computer, all or some of the procedures or functions according to the embodiments of this application are generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any usable medium accessible by the computer, or a data storage device, such as a server or a data center, integrating one or more usable media. The available medium may be a magnetic medium (for example, a floppy disk, a hard disk, or a magnetic tape), an optical medium, a semiconductor medium (for example, a solid state disk (solid state disk, SSD)), or the like.

For same or similar parts of the embodiments in this specification, reference may be made to each other, and each embodiment focuses on a difference from another embodiment. Especially, for the apparatus and system embodiments, the apparatus and system embodiments are basically similar to the method embodiment, and therefore are described briefly. For related parts, refer to the partial description of the method embodiment.

A person skilled in the art may clearly understand that the technology in the embodiments of the present invention may be implemented by using software and a required universal hardware platform. Based on such an understanding, the technical solutions in the embodiments of the present invention essentially, or the portion contributing to the conventional technology may be implemented in a form of a software product. The computer software product may be stored in a storage medium, such as a ROM/RAM, a magnetic disk, or an optical disc, and the computer software product may include several instructions for instructing a computer device (which may be a personal computer, a server, or a network device) to perform the methods described in the embodiments or some parts of the embodiments of the present invention.

For the same or similar parts of the embodiments in this specification, reference may be made to each other. In particular, embodiments of the road constraint determining apparatus disclosed in this application are basically similar to the method embodiments, and therefore are described briefly. For related parts, refer to descriptions in the method embodiments.

The implementations of the present invention described above do not limit the protection scope of the present invention.

**Claims**

1.　A screen display method, comprising:

　　receiving a touch operation for an electronic device when a target scenario is displayed by the electronic device;
　　determining, based on a frame rate at which the electronic device displays the target scenario, a first touch event, and a reporting rate of the electronic device, a second touch event adapted to the frame rate, wherein the first touch event is a touch event generated based on the touch operation, and the second touch event comprises a second moment corresponding to the second touch event and second touch coordinates corresponding to the second touch event; and
　　displaying, based on the second touch event, an interface corresponding to the target scenario.

2.　The method according to claim 1, wherein the determining, based on a frame rate at which the electronic device displays the target scenario, a first touch event, and a reporting rate of the electronic device, a second touch event adapted to the frame rate comprises:

　　determining a duration threshold corresponding to the target scenario; and
　　determining, based on the duration threshold and each display moment corresponding to the frame rate, a second moment corresponding to each second touch event, wherein duration between the display moment and the second moment is not less than the duration threshold.

3.　The method according to claim 1, wherein the determining, based on a frame rate at which the electronic device displays the target scenario, a first touch event, and a reporting rate of the electronic device, a second touch event adapted to the frame rate comprises:

　　determining a first coefficient based on the second moment and each reporting moment corresponding to the reporting rate; and
　　determining the second touch coordinates based on the first coefficient and first touch coordinates of the first touch operation corresponding to each reporting moment.

4.　The method according to claim 3, wherein the determining a first coefficient based on the second moment and each reporting moment corresponding to the reporting rate comprises:

determining a first difference and a second difference separately, wherein the first difference is a difference between a second reporting moment and a first reporting moment, the second reporting moment and the first reporting moment are adjacent reporting moments, the second reporting moment is later than the first reporting moment, and the second difference is a difference between the second reporting moment and the second moment corresponding to the second reporting moment; and

determining a ratio of the second difference to the first difference, wherein the ratio is the first coefficient.

5.  The method according to claim 4, wherein if the first coefficient is greater than 0, the determining the second touch coordinates based on the first coefficient and first touch coordinates of the first touch operation corresponding to each reporting moment comprises:

determining first products of second coordinates and the first coefficient, and determining second products of first coordinates and a second coefficient, wherein the first coordinates are first touch coordinates of the first touch operation corresponding to the first reporting moment, the second coordinates are first touch coordinates of the first touch operation corresponding to the second reporting moment, and the second coefficient is a difference between 1 and the first coefficient; and

determining sums of the first products and the second products, wherein the second touch coordinates are the sums of the first products and the second products; or

if the first coefficient is less than 0, the determining the second touch coordinates based on the first coefficient and first touch coordinates of the first touch operation corresponding to each reporting moment comprises:

determining third products of the first coordinates and the first coefficient, and determining fourth products of the second coordinates and the second coefficient; and

determining sums of the third products and the fourth products, wherein the second touch coordinates are the sums of the third products and the fourth products.

6.  The method according to claim 2, wherein the determining a duration threshold corresponding to the target scenario comprises:

determining, based on a correspondence between different frame rate ranges and different duration thresholds, and the frame rate at which the electronic device displays the target scenario, a duration threshold corresponding to the target scenario;

or

determining, based on a correspondence between different application types and different duration thresholds, and an application type corresponding to the target scenario, a duration threshold corresponding to the target scenario.

7.  The method according to claim 1, wherein the displaying, based on the second touch event, an interface corresponding to the target scenario comprises:

generating a corresponding image frame based on the second touch coordinates corresponding to the second touch event;

determining, when the electronic device refreshes at a refresh rate, the image frame refreshed in a same refresh period; and

generating a corresponding interface based on a target image frame refreshed in the same refresh period, and displaying the interface, wherein the target image frame is generated based on a target touch event, and in the second touch event corresponding to the image frame refreshed in the refresh period, the second moment corresponding to the target touch event is the latest.

8.  The method according to claim 2, wherein
first duration is twice second duration, the first duration is duration of a reporting period corresponding to a reporting rate of the electronic device, and the second duration is duration between the second moments respectively corresponding to two adjacent second touch events.

9.  The method according to claim 1, wherein the determining, based on a frame rate at which the electronic device displays the target scenario, a first touch event, and a reporting rate of the electronic device, a second touch event adapted to the frame rate comprises:

determining a third touch event in the first touch event, wherein the first touch event comprises the third touch event and a fourth touch event, the fourth touch event is a touch event generated based on first n touchscreen signals, and n is a positive integer; and
determining, based on a frame rate at which the electronic device displays the target scenario, the third touch event, and a reporting rate of the electronic device, a second touch event adapted to the frame rate.

10. An electronic device, comprising a processor and a memory, wherein the memory stores program instructions, and when the program instructions are executed by the processor, the electronic device is enabled to perform the method according to any one of claims 1 to 9.

11. A computer storage medium, wherein the computer storage medium stores a computer program or instructions, and when the computer program or the instructions are executed, the method according to any one of claims 1 to 9 is performed.

12. A chip system, comprising a processor, wherein the processor is coupled to a memory and configured to execute a computer program or instructions stored in the memory, and when the computer program or the instructions are executed, the method according to any one of claims 1 to 9 is performed.

| Application layer | | APP | |
| Framework layer | InputConsumer | ViewRootimpl | |
| Hardware abstraction layer | | | |
| Driver layer | TP driver — Input Kernel | | Display Kernel |
| Hardware layer | TP | | LCD |

FIG. 1

Terminal device

Antenna 1                                    Antenna 2

| Mobile communication module<br>2G/3G/4G/5G<br>[150] | Wireless communication module<br>BT/WLAN/GNSS/NFC/IR/FM<br>[160] |

| Speaker<br>[170A] | | Sensor module [180] |
| Receiver<br>[170B] | Audio<br>module<br>[170] | Pressure sensor<br>[180A] |
| Microphone<br>[170C] | | Gyroscope sensor<br>[180B] |
| Headset jack<br>[170D] | | Barometric pressure<br>sensor [180C] |

| Displays 1~N [194] | | Magnetic sensor<br>[180D] |
| Cameras 1~N [193] | Processor<br>[110] | Acceleration sensor<br>[180E] |
| Indicator [192] | | Distance sensor<br>[180F] |
| Motor [191] | | Optical proximity<br>sensor [180G] |
| Key [190] | | Fingerprint sensor<br>[180H] |
| Internal memory [121] | | Temperature sensor<br>[180J] |
| SIM card interfaces<br>1~N [195] | | Touch sensor [180K] |
| External memory<br>interface [120] | | Ambient light sensor<br>[180L] |

| USB interface [130] | Charging<br>management<br>module<br>[140] | Power management<br>module<br>[141] | Bone conduction<br>sensor [180M] |
| Charging input | | Battery [142] | |

FIG. 2

FIG. 3

S11

Receive a touch operation for an electronic device when a target scenario is displayed by the electronic device

S12

Determine, based on a frame rate at which the electronic device displays the target scenario, a first touch event, and a reporting rate of the elecronic device, a second touch event adapted to the frame rate

S13

Display, based on the second touch event, an interface corresponding to the target scenario

FIG. 4

S11

Receive a touch operation for an electronic device when a target scenario is displayed by the electronic device

S12

S121

Determine a duration threshold corresponding to the target scenario

S122

Determine, based on the duration threshold and each display moment corresponding to the frame rate, a second moment corresponding to each second touch event

S13

Display, based on the second touch event, an interface corresponding to the target scenario

FIG. 5

4.16 ms

(t2, x2, y2)

(t1, x1, y1)

sampleTime
(Tr, Xr, Yr)

frameTime

FIG. 6A

4.16 ms

(t2, x2, y2)

(t1, x1, y1)

frameTime
sampleTime
(Tr, Xr, Yr)

FIG. 6B

S11

Receive a touch operation for an electronic device when a target scenario is displayed by the electronic device

S12

S123

Determine a first coefficient based on the second moment and each reporting moment corresponding to the reporting rate

S124

Determine the second touch coordinates based on the first coefficient and first touch coordinates of the first touch operation corresponding to each reporting moment

S13

Display, based on the second touch event, an interface corresponding to the target scenario

FIG. 7

4.16 ms

(t2, x2, y2)

(t1, x1, y1)

5 ms

frameTime

8.33 ms

sampleTime
(Tr, Xr, Yr)

FIG. 8A

4.16 ms

(t2, x2, y2)

(t1, x1, y1)

1 ms

frameTime

8.33 ms

sampleTime

(Tr, Xr, Yr)

FIG. 8B

Example 1: 5 ms

00:15:13 +
276 171 125

00:00:18
000 000 000

00:00:18
500 000 000

00:00:19
000 000 000

00:00:19
500 000 000

00:00:20
000 000 000

Third signal
Second signal
First signal

Example 2: 1 ms

00:07:58 +
338 151 884

00:00:11
500 000 000

00:00:12
000 000 000

00:00:12
500 000 000

00:00:13
000 000 000

Third signal
Second signal
First signal

Example 3: 3 ms

00:07:05 +
461 400 002

00:00:15
000 000 000

00:00:15
500 000 000

00:00:16
000 000 000

00:00:16
500 000 000

Third signal
Second signal
First signal

FIG. 9

Processor (processor) — 1101

Bus — 1103

Read-only memory (ROM)

Basic input/ output system (BIOS)

— 1105

Random access memory (RAM) — 1104

Operating system (OS)

Applications (Application Programs)

Transceiver (transceiver) — 1102

FIG. 10

**EP 4 760 472 A1**

## INTERNATIONAL SEARCH REPORT

| International application No. |
|---|
| **PCT/CN2024/107252** |

| A. | CLASSIFICATION OF SUBJECT MATTER |
|---|---|

G06F3/04845(2022.01)i

According to International Patent Classification (IPC) or to both national classification and IPC

| B. | FIELDS SEARCHED |
|---|---|

Minimum documentation searched (classification system followed by classification symbols)

    IPC: G06F

Documentation searched other than minimum documentation to the extent that such documents are included in the fields searched

Electronic data base consulted during the international search (name of data base and, where practicable, search terms used)

    CNABS, CNTXT, VEN, USTXT, WOTXT, EPTXT, CNKI, 百度, BAIDU, IEEE: 帧率, 刷新率, 报点率, 上报, 频率, 触控, 采样, frame rate, refresh rate, report rate, report, frequency, touch, sample

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 117215429 A (GUANGDONG MINGCHUANG SOFTWARE TECHNOLOGY CO., LTD.) 12 December 2023 (2023-12-12)<br>    description, paragraphs 37-176 | 1-2, 6-12 |
| X | CN 115904127 A (BEIJING XIAOMI MOBILE SOFTWARE CO., LTD.) 04 April 2023 (2023-04-04)<br>    description, paragraphs 61-123 | 1-2, 6-12 |
| A | CN 115390970 A (SPREADTRUM COMMUNICATIONS (TIANJIN) CO., LTD.) 25 November 2022 (2022-11-25)<br>    entire document | 1-12 |
| A | KR 20140011622 A (LG DISPLAY CO., LTD.) 29 January 2014 (2014-01-29)<br>    entire document | 1-12 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 October 2024** | **24 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/107252**

| Patent document cited in search report | | | Publication date (day/month/year) | Patent family member(s) | | | Publication date (day/month/year) |
|---|---|---|---|---|---|---|---|
| CN | 117215429 | A | 12 December 2023 | None | | | |
| CN | 115904127 | A | 04 April 2023 | None | | | |
| CN | 115390970 | A | 25 November 2022 | None | | | |
| KR | 20140011622 | A | 29 January 2014 | KR | 101365818 | B1 | 21 February 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311833651